# EUROPEAN PATENT APPLICATION

(11) **EP 3 879 435 A1**
(43) Date of publication of application: **15.09.2021**
(21) Application number: 19740036.9
(22) Date of filing: 28.06.2019
(51) Int. Cl.: G06K 9/00, G06K 9/32, G06K 9/40, G06K 9/44, G06K 9/46, G06K 9/62, G06K 9/36

(54) **METHOD FOR ANALYSING THE BEHAVIOUR OF PEOPLE IN PHYSICAL SPACES AND SYSTEM FOR SAID METHOD**

(71) Applicant: Cubelizer S.L., 28005 MADRID (ES)
(72) Inventor: GARCÍA CARAVANTES, Marcos, 28005 Madrid (ES); MASID DIÉGUEZ, Celso Luis, 28005 Madrid (ES)
(74) Representative: López Camba, Emilia
(86) International application number: PCT/ES2019/070458
(87) International publication number: WO 2020/260731

(57) **Abstract**

A method comprising the stages of: Capture of video images, establishment of a coverage area, establishment of a region of interest, generation of candidate regions, classification of the candidate regions into persons and non-persons, extraction of structural features, temporal consolidation by tracking moving detections and subsequent temporal consolidation by statistical analysis of static detections and subsequent sending of consolidated detections (tracks) to the analysis element. To this end, overhead positioning image capture and processing devices are used, which offer wide-angle vision and have smaller processing capacity, being connected to a central processing to obtain trajectories of persons, achieving unlimited total surface coverage, high individual detection probability with respect to privacy, ease of physical installation, low cost, high spatial accuracy, obtainment of real-time data and complete and continuous coverage of persons.

## Description

### OBJECT OF THE INVENTION

The object of the present invention, as established in the title, is a method for analysing the behaviour of people in physical spaces, also being an object of the invention, the system required to carry out said method.

The present invention is characterised in that it develops a method wherein the detection and tracking of persons is based on the analysis of images, not on the passive tracking of a radioelectric signal or on active communication with an electronic device, being a method that exceeds the difficulty inherent to image processing, particularly with limited computing resources.

The analysis method has a high degree of effectiveness with low cost in terms of installation and hardware elements, resulting from reduced computing requirements, in carrying out real-time image processing.

Therefore, the present invention falls within the scope of systems and methods that seek to quantify the behaviour of people in physical spaces.

### BACKGROUND OF THE INVENTION

In the prior art there are various patents for managing and analysing the behaviour of people in physical spaces which are commented below and that reflect the state of the art known by the applicant.

EP 246 1270 describes a method, device and computer program product for predicting the behaviour of entities, such as people.

(WO2016187648A1) PCT/AU2016/000180 discloses a tracking system that uses one or more sensors for recording the movement of shoppers in a store, wherein each sensor includes a cell phone antenna, a Wi-Fi antenna, a microcomputer and a passive infrared sensor.

US 8989775 B2 discloses a system for tracking the location of a device that transmits a wireless signal. The wireless signal can be received in a set of receivers. The distances to the device are determined in accordance with signal intensity.

US20130222599 A1 A space is modelled using images from a set of cameras in said space that makes it possible to identify a reference on a local image and its correspondence on a floor plan. This patent does not allow comprehensive, global real-time processing.

US 20130226655 A1 (EP2942748A1) In this patent, customer movement patterns in a retail environment are quantified using a set of movement tracks from the mobile terminal position.

US 20140172489 A1 describes a method implemented in a computer which includes the step of monitoring, in a processing device, the regions of a retail store, determining the number of persons within the region and making a heatmap.

US 20150269143 A1 An image processing system and a method for processing images comprising: an image analysis engine configured to analyse an input image and generate metadata on the input image; an indexing engine configured to structure and organise the metadata and generate index data based on metadata; a search engine configured to extract index data that match a search condition and image data corresponding to the index data that match a search condition, based on the incoming image; and a browser engine configured to generate a heatmap based on the extracted index data and image data and show the heatmap and an image that matches the search condition on a screen.

US 20150310370 A1 A method is described to update a sequence of events which includes the acquisition of video data from a queue area of at least one image source; searching in the boxes for the subjects located at least near a region of interest (ROI) of starting points defined in the video data; tracking a movement of each subject detected through the queue area in a subsequent series of frames; using the tracking, determining whether a location of the tracked subject reaches a predefined fusion point wherein various queues in the queue area converge in a single queue row.

US 9167389 B1 describes systems and methods for determining the locations visited by a mobile device.

US 7930204 B1 The present invention is a method and a system for automatically changing the content of ads on a medium to show contents personalised in accordance with a customer's behaviour or the behaviour of a group of customers in a retail store.

US 8009863 B1 The present invention is a method and system for automatically analysing the behaviour of a person and a plurality of persons within a physical space based on the measurement of the trip of the person and the plurality of persons on input images.

US 8229781 B2 describes methods and devices for determining shopper traffic in retail environments based on specific people counts.

US9270952B2 The implementations described herein merge video and Wi-Fi localisation modules.

WO/2017/145634 discloses an image processing device, imaging device, system for controlling a moving body, image processing method and the necessary program to do so.

Not all of the foregoing systems make it possible to establish anonymous real-time trajectories of individuals based on image processing that can be quantified or are complex to assemble and implement, or are expensive in terms of the means used, or do not offer the possibility of having real-time information, or have a spatial accuracy susceptible of being improved. And in no case do they globally approach a comprehensive and unified method based on real-time processing of images captured by optical devices and conversion of this spatial information to behavioural information.

Therefore, the object of the present invention is to develop a method and system for analysing the behaviour of people in physical spaces that jointly overcomes all the indicated drawbacks by developing a method such as that described and which is set out in its essence in claim one.

### DESCRIPTION OF THE INVENTION

The object of the present invention is a method for analysing the behaviour of people in physical spaces.

Understanding by behavioural analysis the anonymous quantification of the behaviour of people regardless of their identity, wherein said analysis affects aspects such as: People counting, time of permanence, wait time, establishment of origins and destinations, complete trajectories, area-based transition matrix, crowd estimates, etc.

Physical spaces are understood to be, but not limited to:
- Shopping centres: Analysis of the behaviour of people to characterise the attractiveness of the different areas of the shopping centre, description of the internal flow and performance and operation of each store.
- Offices with flexible work spaces, permanent spaces and common areas: Analysis of workstation occupation, meeting room occupation, use and occupation of common areas, including canteens and similar, and event spaces.
- Supermarkets and department stores for analysis of visit sequences, correlations between categories, decision time and cashier wait time.
- Airports: Analysis of check-in, security control and boarding wait times.

The necessary system for the method comprises:
A sensorisation subsystem that performs the following operations:
- Image sequence capture (video)
   ∘ Image capture
   ∘ Establishment of the coverage area
- People detection (operation on the image bitmap)
   ∘ Establishment of region of interest.
   ∘ Background segmentation (generation of a detection mask)
   ∘ Cleaning and filtering (morphological operation on the detection mask).
   ∘ Generation of candidate regions: connected-component labelling.
   ∘ Classification of type in regions: person / non-person
   ∘ Obtainment of discreet detections: position, area, dimensions, colour histogram.
- Temporal consolidation of detections
   ∘ Consolidation by detection tracking

An analysis processing subsystem based on the detections of the device, which performs the following operations:
- Preparation of data in global coordinates
   ∘ Correction of lens distortion (optional stage)
   ∘ Transfer to global coordinates
   ∘ Generation of trajectories
- Generation of metrics, which can be:
   ∘ Basic metrics
      ▪ Barrier meters
      ▪ Capacity meters
      ▪ Analysis of complete space partition
      ▪ Analysis of origins and destinations
   ∘ Derived metrics
      ▪ Compound counts
      ▪ Time of permanence
      ▪ Proportions (ratios)

The stages corresponding to the sensorisation subsystem are:
- Capture of video images (image sequence) by means of sensors which are devices installed in overhead position composed of an image capture element equipped with a wide-angle lens and a processing element. Each device is autonomous and detects, tracks and classifies people within its coverage area.
- Establishment of a coverage area, excluding those areas not relevant to processing.
- Establishment of a Region of Interest (5) which is delimited using included areas and excluded areas, each defined by polygons.
- Generation of candidate regions wherein the input image is analysed in order to group together the pixels corresponding to compact regions (continuous, without holes), which may correspond to people and assign these pixels a unique label on the image.
- Classification of the candidate regions into persons and non-persons.
- Obtainment of discreet detections for the candidate regions corresponding to persons, by applying mathematical operators to the image.
- Temporal consolidation of the detections.
- Sending of consolidated detections (tracks) to the analysis element, which is a centralised processing machine that combines the data of overhead elements with capture and processing data and transforms people trajectory data into information. This information is stored and used to analyse trends, correlations, anomalies, make predictions and groupings.

The stages of the method corresponding to the explained analysis subsystem are:
- Preparation of data in global coordinates. In order to provide extensive coverage, the use of various devices is required. The detections generated in each device are referenced to a coordinate system local to that device. The preparation of global data consists of transferring the detections of the devices to a coordinate system common to all the space of the coverage area.

The preparation of global data is an optional stage, which is only used when the devices are closely coordinated and there are metrics which are calculated from global system coordinates.

This stage comprises, in turn:
∘ Correction of distortion (optional). Distortion is a deviation with respect to a straight-line projection, due to the lens. In a straight-line projection, the straight lines in the space are also straight lines in the image. Two camera models are considered from the viewpoint of distortion:
   - Wide-field camera with radial distortion.
   - Fisheye lens camera.
∘ Transfer to global coordinates. The transfer to global coordinates is performed through perspective transformation or homography. Homography is a matrix operation, characterised in being a transformation matrix. The transformation matrix is individual for each device. This matrix is calculated from the correspondence of at least four points, whose coordinates are known in the coordinate system local to the device and in the global system.
∘ Generation of trajectories. The moving detection tracking process carried out autonomously in each device identifies all the detections belonging to a single person in the coverage area of that device and groups them together in a track. Each track is a partial segment of the trajectory of that person in space, specifically the segment that is within the coverage area of that device. The trajectory generation process analyses the partial segments generated by all the devices and combines them to obtain the complete trajectories of the persons. This process has the following stages:
   ▪ Establishment of compatibility between tracks
   ▪ Association of tracks
   ▪ Estimation of trajectories

### - Generation of metrics

Metric is the name given to a quantifiable measurement that makes it possible to evaluate the operation, performance, operation, etc., of a space based on the behaviour of the people there within. Formally, a metric is a numerical value.

The metrics generation process combines a potentially large dataset, with a high level of detail and granularity, to obtain a few statistically significant aggregate data and that can be used to analyse a space.

Metrics can be calculated using the tracks referenced to a local coordinate system of each device or using the trajectories in global space coordinates.

Some of the possible metrics used may be any of those listed below:
- Basic metrics are metrics obtained from the data generated by tracking devices or trajectories having the following features:
   ∘ Input: List of detections of local tracks or detections grouped together in trajectories for a defined temporal analysis period.
   ∘ Output: Set of metrics.
   ∘ Operation: The system may use one of the following metrics generation processes and which are detailed below or others that generate metrics that fulfil the definition expounded above:
      - Barrier meters.
      - Capacity meters.
      - Analysis of complete space partitioning.
      - Calculation of origins and destinations.
- Derived metrics are metrics obtained from other metrics, whether basic or derived, having the following features:
   ∘ Input: List of basic or derived metrics, corresponding to a defined temporal analysis period.
   ∘ Output: Set of metrics.
   ∘ Operation: The system may use one of the following metrics and which are detailed below or others that fulfil the definition of metric expounded above:
      ▪ Compound counts
      ▪ Time of permanence
      ▪ Proportions

The metrics listed above do not have to be exhaustive and any other process that generates data that fulfils the definition of metric.

Additionally, in a complementary manner not essential to the invention, the method may continue with the following stages:
- Metrics labelling: assignment of semantic information to individual metrics or groups of metrics. General informative examples:
   type, subtype and category of the entity to which the metric corresponds (pedestrian access to a shopping centre, XXX brand store and "jewellery" product category, meeting room, office, work desk, passport control station,...), spatial information not measurable by the system (province, city/town, street, building, plant, area,...), categorised temporal information (weekday, weekend, afternoon, morning, lunchtime, spring,...), and external information (weather, events,...).
- Storage of metrics.
- Analysis of patterns and generation of behavioural models based on behavioural metrics and taking into account temporal, spatial or label-based correlations:
   ∘ Generation of models for making predictions.
   ∘ Generation of models for detecting anomalies.
   ∘ Generation of models for estimating values of missing data.
   ∘ Automatic grouping of metrics labelled in accordance with similar behaviours over time, spatial proximity or spatial affinity (origins-destinations).

The described features make it possible to achieve:
- Comprehensive and continuous coverage of persons, using image capture and processing devices equipped with a passive optical sensor that does not require cooperation of the persons and, in particular, does not require the inclusion of an electronic device or use of additional applications or systems.
- High spatial accuracy of the detection < 20 cm through the use of the optical sensor and image processing techniques.
- Low cost of the system since: Firstly, the algorithms have been optimised to require a low computational load and therefore do not need a sophisticated local processor to run in real time; and secondly, the image sensor is a unique sensor in the visible band, cheaper than other alternatives, such as the use of an infrared sensor or a double sensor to have stereo-vision.

- Obtainment of real-time data through the optimised process, which enables continuous data delivery without significant delay with respect to the capture instant (retard < 1 minute).
- Give coverage to areas of any size minimising the deployment of devices, upon having a wide-angle lens.
- High individual detection probability (>95 %) through the use of sophisticated processing and detection algorithms and the temporal consolidation of the detections, upon using extensive observation time with respect to the individual detection for decision making.
- Obtain data on the behaviour of a person over an extensive time period (sequence of positions) and corresponding to complex actions, thereby overcoming the generation of statistics based on the combination of gross positions, as in the case of heatmaps.
- With regard to privacy (and to the corresponding laws currently in force), since they are not personal data, nor identify persons, nor generate data that enable the identification thereof. In particular, it does not store images.

Unless otherwise indicated, all the technical and scientific elements used in this specification have the meaning usually understood by a person skilled in the art to which this invention belongs. In the practice of this invention, methods and materials similar or equivalent to those described in the specification can be used.

Throughout the description and claims, the word "comprises" and its variants do not intend to exclude other technical features, additives, components or steps. For persons skilled in the art, other objects, advantages and features of the invention shall be partly inferred from the description and partly from the practice of the invention.

### DESCRIPTION OF THE FIGURES

To supplement the description made and with the aim of helping to better understand the features of the invention, in accordance with a preferred example of a practical embodiment thereof, a set of drawings is provided as an integral part of said description wherein, for illustrative and non-limiting purposes, the following has been represented:
Figure 1 shows a representation of a possible physical space wherein the behaviour of people will be quantified by means of overhead image capture and processing devices.
Figure 2 shows a simplified representation showing: a captured image, a coverage area and a region of interest.
Figure 3 shows the masks of four candidate regions, three of which corresponding to persons and one that does not correspond to a person.
Figure 4 shows a representation of the physical space to be monitored, showing the regions that cover the different image capture and processing devices and a possible trajectory.
Figure 5 shows a schematic view of the system used for the method object of the invention.

### PREFERRED EMBODIMENT OF THE INVENTION

In view of the figures, a preferred embodiment of the proposed invention is described below.

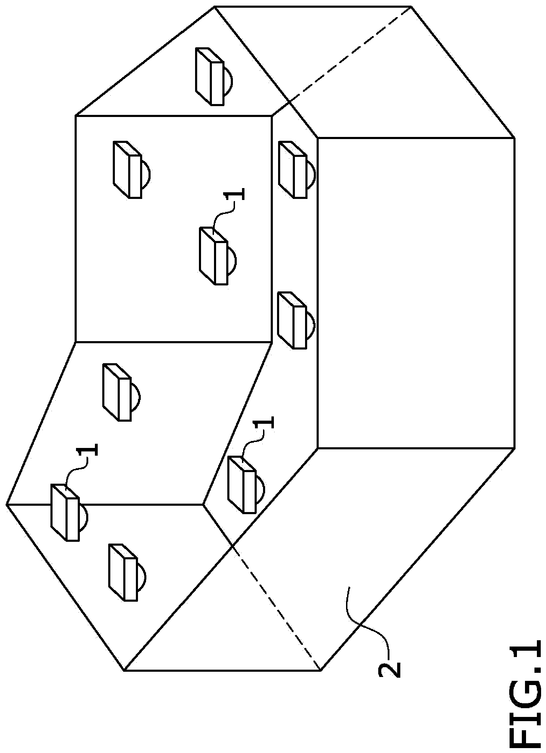

Figure 1 shows a representation of a possible physical space wherein the behaviour of the persons will be quantified by means of overhead image capture and processing devices, wherein a sensorisation subsystem can be observed that comprises a series of overhead devices (1) for capturing and processing images distributed over the surface to be covered (2).

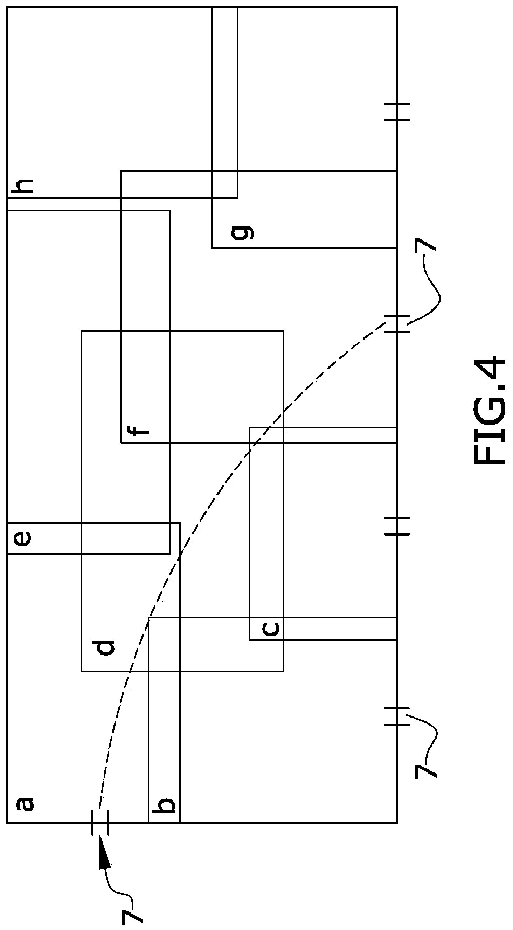

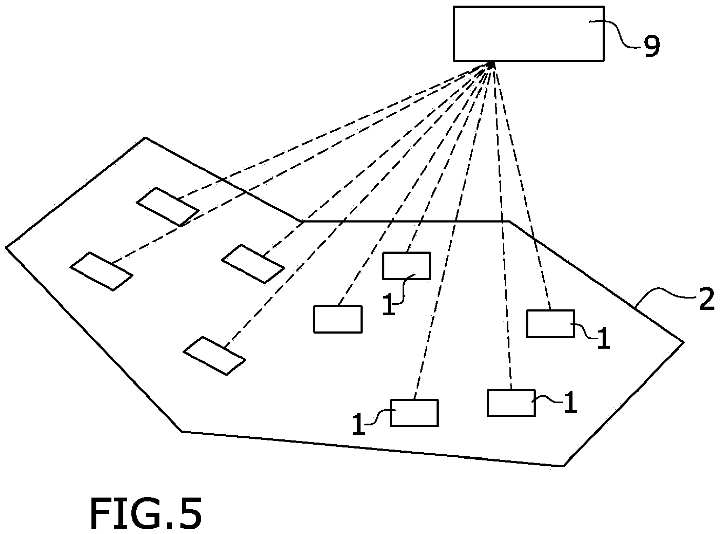

Figure 5 shows the surface of the physical space (2) based on which the behaviour of the persons will be quantified and which comprises:
- a sensorisation subsystem which in turn comprises the image capture and processing devices (1) distributed such as to cover all or part of the surface of the physical space to be controlled wherein temporal consolidation of the detections takes place.
- an analysis subsystem comprising a central unit (9) connected either wirelessly or hard-wired to each and every one of the image capture and processing devices (1), with the object of establishing trajectories (8) in said central unit (figure 4).

The image capture and processing devices (1) are overhead devices comprising a visible spectrum camera with a very wide field of view -up to 200 effective degrees-, capturing images with three colour channels at an acquisition rate of between 1 and 8 images per second. The devices have a overhead location with the image plane parallel to the ground to maximise coverage.

The processing means used in the overhead devices may be a general-purpose processor, a digital signal processor, a FPGA (Field Programmable Gate Array) type programmable hardware device, a dedicated ASIC (Application-Specific Integrated Circuit) circuit or a combination thereof.

The method object of the invention comprises the following stages, which are expounded in detail and with the graphic support of the figures.
- **Capture of the sequence of images** using a series of overhead image capture and processing devices (1) distributed over the surface to be covered (2).

Said devices comprise a visible spectrum camera with a very wide field of view - up to 200 effective degrees-, capturing images with three colour channels at an acquisition rate of between 1 and 8 images per second. The minimum pixel size of the objects to be detected is 15x20 pixels. The devices have an overhead location with the image plane parallel to the ground to maximise coverage.

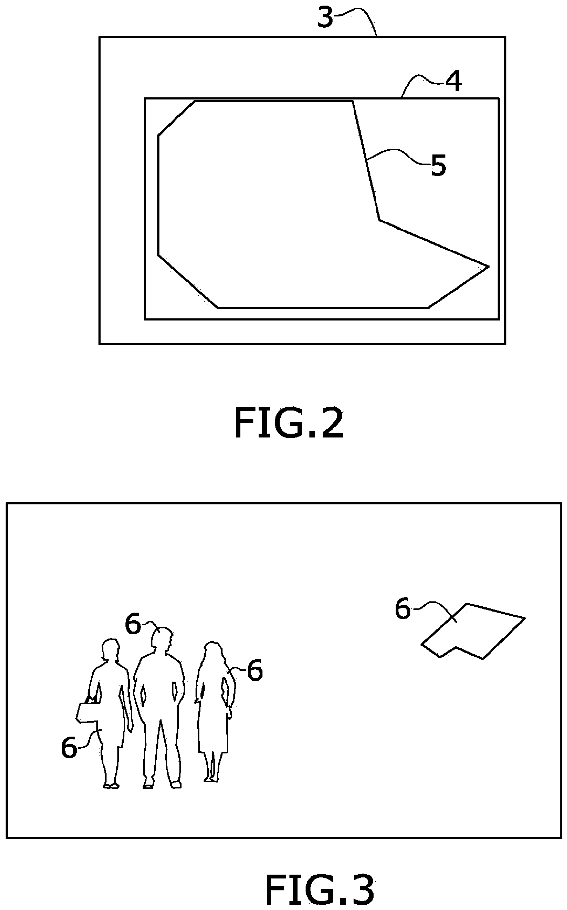

The processing means used in the overhead devices may be a general-purpose processor, a digital signal processor, a FPGA (Field Programmable Gate Array) type programmable hardware device, a dedicated ASIC (Application-Specific Integrated Circuit) circuit or a combination thereof.
- **Establishment of the coverage area.** The previously captured image (3) is cropped to establish the coverage area (4) of each device (1) as observed in figure 2.

This module excludes those areas that are not relevant to the processing: Very remote areas, areas of non-interest (a wall, an inaccessible space), parts of the image missing information (in the case of the edges of images captured with a very wide field of view (>180°)), etc.
The objective of this exclusion is to process the smallest possible amount of pixels.

The method continues with a people detection stage, which in turn comprises the following stages:
- **Establishment of a Region of Interest** (5) which is delimited using included areas and excluded areas, each defined by polygons. The area of interest is maintained the same as in the original image, while the pixels of non-interest areas are fixed at a constant value. These pixels fixed at a constant value will never be susceptible of being detected as corresponding to a detection. A possible particular case is that this operation is ineffective because the area of interest corresponds to the complete image.
- **Background segmentation** wherein a mask-type image (6) is generated from the original image (figure 3), having the same dimensions but a single channel, wherein the pixels corresponding to static objects have a value 0 and the pixels corresponding to moving objects have a value other than 0.

Figure 3 shows the masks of four candidate regions, three of which corresponding to persons and one which does not correspond to a person.

The mask (6) resulting from this operation will give more or less extensive and more or less compact pixel regions, whose size and shape will be similar to that of the original object. However, the result of the background segmentation operation is noisy, with appearance of the following phenomena: false detections, unique split objects, different merged objects, cavities in the detected objects, incomplete detections.

In order to assign values to the pixels, an adaptive background segmentation algorithm based on Adaptive Gaussian Mixture-based Background/Foreground Segmentation Algorithm is used, not being limiting the use of other possible algorithms such as: Dense optical flow segmentation algorithm with adaptive threshold; non-parametric models; difference between consecutive images with adaptive threshold.
- **Cleaning and filtering of regions.** In this stage, mask deficiencies arising from the background segmentation operation are eliminated and corrected: false detections, split objects, merged objects, objects with cavities. Cleaning and filtering are carried out in two steps:
   - Noise reduction due to the increase in observation time through the integration of successive masks (optional)
   - Recovery of the shape of the person

The observation time increase process is carried out based on the mask-type image, having a size (Wp, Hp, 1), obtaining a mask-type image, having a size (Wp, Hp, 1).

This module reduces the noise in the detection upon increasing observation time. Application is optional and is only adequate for a system configuration and an environment wherein image capture frequency is fast compared to the characteristic time of the dynamics of the environment under observation: the position of the person to be detected must be stable during the increased observation time.

The increase in observation time is implemented by averaging the images of the masks corresponding to the increased observation time.
The shape recovery process of the person is carried out based on the mask-type image, having a size (Wp, Hp, 1), obtaining a mask-type image having a size (Wp, Hp, 1). The image is a mask: with background = 0, movement ≠ 0.

In a possible form of embodiment, a sequence of binary morphological operations is used: erosion, dilation, opening, closing, propagation, filling of cavities. The joint result is: eliminate isolated and small detection areas, eliminate holes in detection areas, connect split detection areas corresponding to the same object.
- **Generation of candidate regions** wherein the input image is analysed in order to group together pixels corresponding to compact regions (regions whose pixels are connected) and assign these pixels a unique label on the image. This stage generates a mask-type image wherein the background pixels have a value 0 and the pixels corresponding to the candidate region "i" have a value i. The total number of these regions is N.
These regions are called candidate regions because they are regions wherein an object of interest has been detected, but there is not yet enough information to establish whether there is a person or other type of object.

To this end, in a possible form of embodiment the connected-component labelling method is used.
- **Classification of candidate regions in persons and non-persons** using, in a possible form of embodiment, a mathematical model which has been adjusted using training images (images of the same type as those used by the real system). The application of the mathematical model to each candidate region makes it possible to obtain the class to which this region belongs with the highest probability. The label of that class is assigned to the region, in addition to a confidence value of that decision.

Classification is performed in two steps:
- Extraction of structural features
- Supervised classification system
   - **The extraction of structural features** is made by applying a mathematical operator to the image, whose objective is to change to a representation with smaller dimensionality and preserve the greatest possible amount of information in that representation for the classification application. A vector with features such that it describes the structure of the candidate region.

To this end, in a possible form of embodiment a Histogram of Oriented Gradients (HOG) is used. This is a parameterisable method: the selection of parameters (block size, cell size, overlap, histogram size) has been adjusted to the type of images specific to the system: low resolution, overhead image and all the possible orientations of the persons in the image.
- **Supervised classification of characteristic vectors,** which consists of assigning each vector to a class, in this case a person or non-person, in addition to generating a value that quantifies the confidence on the assigned label.

To this end, a mathematical model adjusted using training vectors is used. The training vectors were obtained from images of the same type as those used by the real system and processed using the method for extracting structural features described in the preceding section. The application of the mathematical model to each vector makes it possible to obtain the class to which this region belongs with the highest probability. The label of that class is assigned to the vector, in addition to a confidence value of that decision.

In a possible form of embodiment, the Support Vector Machine (SVM) technique is used. It is a parameterisable method: the selection of parameters (type of SVM, kernel type and parameters inherent to each) was adjusted to the type of images specific to the system.

The classification of candidate regions into persons and non-persons ends with the assignment of a class to each candidate region.
- **Obtainment of discreet detection** which, based on the image labelled with the candidate regions, excludes those candidate regions that do not correspond to persons.

A spatial descriptor is calculated for each of the remaining candidate regions, those labelled as persons. Additionally, the moment of time in which the image was captured is assigned as a timestamp. Therefore, the timestamp is common to all the detections generated with the same image.

In order to carry out this stage, the spatial descriptor used may be one or a combination of the following spatial descriptors:
- Position of the centre of mass of the region (x, y)
- Bounding box of the region (xmin, ymin, xmax, ymax)
- Position of the projection of the detection on the ground (xs, ys) The ground projection would correspond to the place where a person has their feet.
- Area and perimeter of the region (number of pixels)
- Colour histogram
- Description of the shape of the region:
   ∘ main directions
   ∘ aspect ratio
   ∘ compactness

- Next, a **temporal consolidation of detections** is carried out, i.e. the detection of persons is performed instantaneously and independently for each image. The idea of continuity over time is incorporated through the temporal consolidation of the detections: the present objects which have a position in a time instant will be in a nearby position in a nearby time instant. In particular, a unique identifier can be assigned to the detections corresponding to the same person in successive time instants (detections calculated from different images).

### - Consolidation by tracking of moving detections

It is carried out based on a list of N discreet detections and a list of N consolidated detections, called tracks, is obtained. Each track corresponds to a discreet detection where to a unique identifier for that sensor has been assigned. The track is defined by a unique identifier, a position descriptor (which may be improved and/or extended with respect to the original detection), a time instant and an information uncertainty measurement.

Tracking moving detections is a process with memory, wherein a record of the active tracks is kept. In order to establish the consolidation, the tracking uses a status vector to represent the detections and a mathematical model of the evolution of the system. This process has the following stages:
- Association of detections with existing tracks: Determination of the detections that correspond to existing tracks.
- Update of existing tracks: Update of the track descriptor with the data of the new detection.
- Generation of new tracks: Generation of a new identifier for detections that do not correspond to existing tracks.
- Track maintenance: elimination of tracks which have not been recently updated, typically corresponding to persons who have left the coverage area or to false detections.

To monitor tracks, this solution uses:
- The mathematical model uses the spatial descriptor obtained from the discreet detections as a status vector.
- Association of detections with existing tracks using the Global Nearest Neighbour Standard Filter technique.
- Update of existing tracks with an alpha-beta filter or with a Kalman filter.
- Maintenance of tracks with elimination when they exceed a preconfigured time without updating.

- Temporal consolidation of static detections.
- **Next, data are prepared in global coordinates** upon obtaining the temporal consolidation of the moving detections.

In order to provide extensive coverage, the use of various devices is required. The detections generated in each device are referenced to a local coordinate system of that device. The preparation of global data consists of transferring the detections of the devices to a coordinate system common to all the space of the coverage area.

The preparation of global data is an optional stage, which is only used when the devices are closely coordinated and there are metrics which are calculated from global system coordinates.

This stage comprises, in turn:
- Correction of distortion (optional) having the following features:
   ∘ Input: List of N detections. They are detections whose coordinates are associated with the local reference system of each device and are the object of distortion of the wide-angle lens. [Note: From this step onwards, all the detections are consolidated detections].
   ∘ Output: List of N detections, with the distortion corrected for the local coordinates.
   ∘ Operation: Distortion is a deviation with respect to a straight-line projection, due to the lens. In a straight-line projection, the straight lines in the space are also straight lines in the image. Two camera models are considered from the viewpoint of distortion:
      - Wide-field camera with radial distortion.
      - Fisheye lens camera. It is an extreme case of radial distortion wherein the camera captures images with a field of view close to or greater than 180°.
      A mathematical model is considered for correcting distortion in each of the previous cases.
      Eventually, if a non-wide-angle lens is used that introduces negligible distortion with respect to the resolution of the system, the distortion correction operation may not be necessary and, therefore, not applied.
   ∘ Implementation: The mathematical model for correcting distortion for the wide-angle lens uses a polynomial model for both radial and tangential deviation. The coefficients of the polynomial are those which specifically characterise each camera.
   The mathematical model for correcting distortion in a fisheye lens camera uses a polynomial model over the trigonometric tangent function for the radial deviation. The coefficients of the polynomial are those which specifically characterise each camera.
- Transfer to global coordinates having the following features:
   ∘ Input: List of N detections. They are detections whose coordinates are associated with the local reference system of each device and wherein the distortion of the wide-angle lens has been corrected.
   ∘ Output: List of N detections, wherein a new spatial descriptor has been calculated for each detection in the global coordinates system of the supervision analysis area. These global coordinates are common to all the devices.
   ∘ Operation: The transfer to global coordinates is performed through perspective transformation or homography. Homography is a matrix operation, characterised in being a transformation matrix. The transformation matrix is individual for each device. This matrix is calculated from the correspondence of at least four points, whose coordinates are known in the coordinate system local to the device and in the global system.
- Generation of trajectories having the following features:
   - Input: List of N detections in global coordinates. The list contains all the detections generated within a time interval and belonging to all the devices in the area under study.
   - Output: List of M detections grouped into K trajectories; M ≤ N, K<N. A trajectory is a sequence of positions of a person in the coverage area of the system. Each trajectory has a unique identifier and can combine detections from various devices.
   - Operation: The moving detection tracking process carried out autonomously in each device identifies all the detections belonging to a single person in the coverage area of that device and groups them together in a track. Each track is a partial segment of the trajectory of that person in space, specifically the segment that is within the coverage area of that device. The trajectory generation process analyses the partial segments generated by all the devices and combines them to obtain the complete trajectories of the persons. This process has the following stages:
      - Establishment of compatibility between tracks: Determination of whether two tracks of physically close regions can correspond to the same person. Potentially, the tracks can come not only from physically close regions but also from the same region, in the overlap area between devices.
      - Association of tracks: Using the compatibility measurement of the previous stage, compatible tracks are grouped together, in the most likely way, to form the trajectories.
      - Estimated trajectories: combination of the data of the associated tracks.

Figure 4 shows a representation of the surface (2) to be controlled and to which the method is to be applied and, as can be observed, is mapped into different partially overlapping areas or surfaces (a, b, c, d, e, f, g, h) covering all or part of the surface (2) to be controlled and wherein a trajectory (8) has been represented which, starting from an input or output port (7), goes towards another input or output port.

The trajectory (8) is obtained through the temporal consolidation of the detections made by each of the image capture and processing devices (1) such that, associated, said detections form a trajectory (8).
- **Lastly, metrics are generated** which, while being non-limiting, some of those listed below can be used, in addition to using other different processes not included among the metrics listed below:
   ∘ Basic metrics
      a) Barrier meters
      b) Capacity meters
      c) Analysis of complete space partition
      d) Analysis of origins and destinations
   ∘ Derived metrics
      a) Compound counts
      b) Time of permanence
      c) Proportions (ratios)

Wherein the basic metrics obtained from the data generated by the devices, tracks or trajectories and wherein the different types of basic metrics have the following features:
a) Barrier meters having the following features:
   - Input: List of detections of local tracks or detections grouped into trajectories.
   - Output: Metric of number of persons who have crossed a virtual barrier in an incoming direction and number of persons who have crossed it in an outgoing direction in a period of time.
   - Operation: A virtual barrier was used for the calculation, defined as a sequence of points referenced to the same coordinate system as the detections to be processed. The positions of each sequence of detections corresponding to a person (track or trajectory) are analysed, evaluating whether that sequence crosses the virtual barrier. The barrier meters generate a metric with the number of incoming virtual barrier transitions and with the number of outgoing transitions.
b) Capacity meters having the following features:
   - Input: List of detections of local tracks or detections grouped into trajectories.
   - Output: Metric of number of persons present in the delimited area during a period of time.
   - Operation: A virtual area was used for the calculation, defined as a sequence of points that form a closed polygonal line, referenced to the same coordinate system as the detections to be processed. The positions of each sequence of detections corresponding to a person (track or trajectory) are analysed, evaluating whether the positions are inside the virtual area. Capacity meters generate a metric with the number of persons inside the area.
c) Space partitioning analysis having the following features:
   - Input: List of detections of local tracks or detections grouped into trajectories.
      - - Output: Metrics of number of persons present in each partition unit, time of permanence in each unit and flow of persons between adjacent units.
   - Operation: For this analysis, the space is partitioned into areas or units. This partition can be extended to all or part of the coverage area. The partition areas do not overlap each other. Each area is defined by a sequence of points that form a closed polygonal line. The positions of each sequence of detections corresponding to a person (track or trajectory) are analysed, evaluating which is the sequence of units through which the person passes and how much time they spend in each unit. After the individual analysis of all the trajectories, the data are aggregated for the entire partition to obtain aggregate (total value) and statistical (average, variance, mean, etc.) information about the number of persons in each partition, time of permanence in each partition and transitions between partitions.
d) Calculation of origins and destinations having the following features:
   - Input: List of detections of local tracks or detections grouped into trajectories.
      - - Output: Metrics of transitions of persons between a set of areas of interest in the space. Typically, these areas of interest are assigned to accesses to the space (where entry to/exit from the coverage area takes place) and to unique elements.
   - Operation: For the calculation, each area of interest can be defined as (a) a sequence of points that form a closed polygonal line or (b) a circle, represented by its centre (a point) and its radius (a distance). The positions of each sequence of detections corresponding to a person (track or trajectory) are analysed, evaluating in which area of interest they start and end, calculating in this case a transition between that origin area and the destination area.

Furthermore, derived metrics are metrics obtained from other metrics, whether basic or derived, and wherein the different types of derived metrics have the following features:
a) Compound counts having the following features:
   - Input: Set of count metrics that must be combined. All count metrics must be of the same type.
      - - Output: Compound count metrics.
   - Operation: Counts corresponding to the set of metrics are aggregated to obtain a metric of the same type and which is representative of the set.
b) Times of permanence
   - Input: Space count metrics: entry counts, exit counts and capacity counts of that space.
   - Output: Metric of average time of permanence in the space.
   - Operation: Time of permanence is calculated using three metrics: entry counts, exit counts and capacity counts of an area. A mathematical model is used that estimates the average time of permanence in the space based on the entry and exit counts and the capacity count of the space. This model can be a theory or queues model or a Kalman filter. The model is statistically adjusted to reduce the possible effect of possible errors in the measurement to a maximum and give the best possible estimate. Eventually, one of the three metrics may not be available and a model adequate to the situation can be applied, which also makes it possible to estimate average time of permanence, although with a potentially lower accuracy.
c) Proportions (ratios)
   - Input: Pairs of metrics that can be analysed jointly to obtain a proportion ratio. The metrics that form the pair do not have to be of the same type.
   - Output: Metric of proportion ratio between the two metrics.
   - Operation: The quotient between the metrics is calculated.

Additionally, optionally and complementarily, the following can be performed:
- Metrics labelling: assignment of semantic information to individual metrics or groups of metrics. General informative examples: type, subtype and category of the entity to which the metric corresponds (pedestrian access to a shopping centre, XXX brand store and "jewellery" product category, meeting room, office, work desk, passport control station,...), spatial information not measurable by the system (province, city/town, street, building, plant, area,...), categorised temporal information (weekday, weekend, afternoon, morning, lunchtime, spring,...), and external information (weather, events,...).
- Storage of metrics.
- Analysis of patterns and generation of behavioural models based on behavioural metrics and taking into account temporal, spatial or label-based correlations:
   ∘ Generation of models for making predictions.
   ∘ Generation of models for detecting anomalies.
   ∘ Generation of models for estimating values of missing data.
   ∘ Automatic grouping of metrics labelled in accordance with similar behaviours over time, spatial proximity or spatial affinity (origins-destinations).

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. A method for analysing the behaviour of people in physical spaces, **characterised in that** it comprises the stages of:
- **capture of the sequence of images** by means of a series of overhead image capture and processing devices (1) distributed over the surface to be covered (2);
- **establishment of the coverage area.** the previously captured image (3) is cropped to establish the coverage area (4) of each device (1);
- **establishment of the Region of Interest** (5), which is delimited using included areas and excluded areas, the area of interest is maintained the same as in the original image, while the pixels of the non-interest areas are fixed at a constant value;
- **background segmentation** wherein a mask-type image (6) is generated from the original image, having the same dimensions, wherein the pixels corresponding to static objects have a value 0 and the pixels corresponding to moving objects have a value other than 0;
- **cleaning and filtering of regions,** in this stage deficiencies arising from the background segmentation operation are eliminated and corrected: false detections, split objects, merge objects, objects with cavities;
- **generation of candidate regions** wherein the image obtained is analysed with the improvement of the background segmentation image, in order to group together the pixels corresponding to compact regions (set of connected pixels) and assign these pixels a unique label on the image;
- **classification of candidate regions into persons and non-persons** using, in a possible form of embodiment, a mathematical model which has been adjusted using training images.
classification is performed in two steps:
- extraction of structural characteristics, which is done by applying a mathematical operator to the image of the region, whose objective is to change to a representation with a smaller dimensionality; and
- a supervised classification system that consists of assigning each features vector to a class; to this end, a mathematical model which has been adjusted using training vectors is used;
- **obtainment of discreet detections** from the image, which is a mask labelled with N labels wherein the pixels corresponding to the "i" region have a value i, 0 < i ≤ N;
- next, a **temporal consolidation of detections** is carried out, i.e. the detection of persons is performed instantly and independently for each image;
using a temporal detection consolidation mechanism to track moving detections;
- **next, data are prepared in global coordinates** upon obtaining the temporal consolidation of the moving detections, which consists of transferring the detections from the devices to a coordinate system common to all the space of the coverage area;
this stage comprises, in turn:
- correcting the distortion (optional) or the deviation with respect to a straight line,
- transfer to global coordinates,
- generation of trajectories; and
- **generation of metrics,** which are calculated using the tracks referenced to a local coordinate system of each device or using the trajectories in global space coordinates.

2. The method for analysing the behaviour of people in physical spaces, according to claim 1, **characterised in that** in order to assign the pixel values an Adaptive Gaussian Mixture-based Background/Foreground Segmentation Algorithm is used, or a dense optical flow segmentation algorithm and adaptive threshold, or non-parametric models, or an algorithm based on the difference between consecutive images and an adaptive threshold.

3. The method for analysing the behaviour of people in physical spaces, according to claim 1 or 2, **characterised in that** the cleaning and assignment of regions is done in two steps:
• noise reduction due to the increase in observation time through the integration of successive masks (optional),
• recovery of the shape of the person,
wherein the observation time increase process is carried out based on a mask-type image, size (Wp, Hp, 1), obtaining a mask-type image, having a size (Wp, Hp, 1) and is implemented averaging the mask images corresponding to the increased observation time, while
the increase in observation time is carried out based on a mask-type image, size (Wp, Hp, 1), obtaining a mask-type image, and size (Wp, Hp, 1) wherein the image is a mask: with background = 0, movement ≠ 0, using a sequence of binary morphological operations: erosion, dilation, opening, closing, propagation and filling of cavities.

4. The method for analysing the behaviour of people in physical spaces, according to claim 1 or 2 or 3, **characterised in that** the connected-component labelling method is used to generate candidate regions.

5. The method for analysing the behaviour of people in physical spaces, according to claim 1 or 2 or 3 or 4, **characterised in that** a Histogram of Oriented Gradients (HOG) is used to generate structural features in the stage of candidate regions in persons or non-persons.

6. The method for analysing the behaviour of people in physical spaces, according to any of the preceding claims, **characterised in that** the support vector machines method is used for the supervised classification in the candidate regions stage.

7. The method for analysing the behaviour of people in physical spaces, according to any of the preceding claims, **characterised in that** the spatial descriptor used to obtain discreet detections is one or a combination of the following spatial descriptors:
- position of the centre of mass of the region (x, y),
- bounding box of the region (xmin, ymin, xmax, ymax),
- position of the projection of the detection on the ground (xs, ys), which would correspond to the place wherein a person has their feet,
- area and perimeter of the region (number of pixels),
- colour histogram;
- description of the shape of the region:
∘ main directions,
∘ aspect ratio, and
∘ compactness.

8. The method for analysing the behaviour of people in physical spaces, according to any of the preceding claims, **characterised in that** consolidation by tracking of moving detections is carried out based on a list of N discreet detections and a list of N consolidated detections, called tracks, are obtained wherein each track corresponds to a discreet detection which has been assigned a unique identifier for that sensor: the track is defined by a unique identifier, a position descriptor (which may be improved and/or extended with respect to the original detection), a time instant and an information uncertainty measurement;
tracking of moving detections uses a status vector to represent the detections and a mathematical model of the evolution of the system; this process has the following stages:
• association of detections with existing tracks: determination of the detections that correspond to existing tracks;
• update of existing tracks: update of the track descriptor with the data of the new detection;
• generation of new tracks: generation of a new identifier for detections that do not correspond to existing tracks;
• track maintenance: elimination of tracks which have not been recently updated, typically corresponding to persons who have left the coverage area or to false detections;
While for monitoring tracks:
• the mathematical model uses the spatial descriptor obtained from the discreet detections as a status vector;
• association of detections with existing tracks using the Global Nearest Neighbour Standard Filter technique;
• update of existing tracks with an alpha-beta filter or with a Kalman filter; and
• maintenance of tracks with elimination when they exceed a preconfigured time without updating.

9. The method for analysing the behaviour of people in physical spaces, according to any of the preceding claims, **characterised in that** the correction of distortion has the following features:
∘ input: list of N detections; they are detections whose coordinates are associated with the local reference system of each device and are the object of distortion of the wide-angle lens;
∘ output: list of N detections, with the distortion corrected for the local coordinates;
two camera models are considered from the viewpoint of distortion:
• wide-field camera with radial distortion;
• fisheye lens camera; it is an extreme case of radial distortion wherein the camera captures images with a field of view close to or greater than 180°;
it is considered a mathematical model for correcting distortion in each of the preceding cases, wherein the mathematical model for correcting distortion for a wide-angle camera uses a polynomial model for both radial and tangential deviation; the polynomial coefficients are those that specifically characterise each camera, while the mathematical model for correcting distortion in a fisheye lens camera uses a polynomial model over the trigonometric tangent function for the radial deviation; and the coefficients of the polynomial are those which specifically characterise each camera.

10. The method for analysing the behaviour of people in physical spaces, according to any of claims 1 to 8, **characterised in that** the transfer to global coordinates is carried out performing a perspective transformation or homograph or matrix operation, which has a transformation matrix, wherein the transformation matrix is individual for each device and also has:
∘ input: list of N detections; they are detections whose coordinates are associated with the local reference system of each device and wherein the distortion of the wide-angle lens has been corrected;
∘ output: list of N detections, wherein a new spatial descriptor has been calculated for each detection in the global coordinate system of the supervision analysis area; and these global coordinates are common to all the devices.

11. The method for analysing the behaviour of people in physical spaces, according to any of claims 1 to 8, **characterised in that** the generation of trajectories is carried out in each device autonomously, identifying all the detections belonging to a single person in the coverage area of that device and groups them together in a track wherein each track is a partial segment of the trajectory of that person in space; specifically it is the segment which is inside the coverage area of that device and wherein the trajectory generation process analyses the partial segments generated by all the devices and combines them to obtain the complete trajectories of persons and wherein this stage also has:
• input: list of N detections in global coordinates wherein the list contains all the detections generated within a time interval and belonging to all the devices in the area under study;
• output: list of M detections grouped into K trajectories; M ≤ N, K<N, wherein each trajectory has a unique identifier and can combine detections from various devices.

12. The method for analysing the behaviour of people in physical spaces, according to claim 11, **characterised in that** the trajectory generation process has the following stages:
• establishment of compatibility between tracks: determination of whether two tracks of physically close regions can correspond to a single person; potentially, the tracks can come not only from physically close regions but also from the same region, in the overlap area between devices;
• association of tracks: using the compatibility measurement of the previous stage, compatible tracks are grouped together, in the most likely way, to form the trajectories; and
• estimated trajectories: combination of the data of the tracks which have become associated.

13. The method for analysing the behaviour of people in physical spaces, according to any of the preceding claims, **characterised in that** the generation of metrics is carried out using any of the methods described below or combinations thereof:
∘ basic metrics,
a) barrier meters,
b) capacity meters,
c) analysis of complete space partition,
d) analysis of origins and destinations,
∘ derived metrics,
a) compound counts,
b) time of permanence, and
c) proportions (ratios).

14. The method for analysing the behaviour of people in physical spaces, according to claim 13, **characterised in that** the different types of basic metrics have the following features:
a) barrier meters that use a virtual barrier, defined as a sequence of points referenced to the same coordinate system as the detections to be processed;
b) capacity meters wherein a virtual area is used, defined as a sequence of points that form a closed polygonal line, referenced to the same coordinate system as the detections to be processed;
c) space partitioning analysis
the space is partitioned into areas or units; this partition can be extended to all or part of the coverage area; the partition areas do not overlap each other;
d) calculation of origins and destinations
each area of interest can be defined as (a) a sequence of points that form a closed polygonal line or (b) a circle, represented by its centre (a point) and its radius (a distance).

15. The method for analysing the behaviour of people in physical spaces, according to claim 13, **characterised in that** the different types of derived metrics have the following features:
a) compound counts wherein the counts corresponding to the set of metrics are aggregated to obtain a metric of the same type and which is representative of the set;
b) times of permanence are calculated using three metrics: entry counts, exit counts and capacity counts of an area; a mathematical model is used that estimates the average time of permanence in the space based on the entry and exit counts and the capacity count of the space;
c) Proportions (ratios), wherein the quotient between the metrics is calculated.

16. The method for analysing the behaviour of people in physical spaces, according to any of the preceding claims, **characterised in that** the following take place additionally and complementarily after the generation of metrics:
- metrics labelling: assignment of semantic information to individual metrics or groups of metrics;
- storage of metrics;
- analysis of patterns and generation of behavioural models based on behavioural metrics and taking into account temporal, spatial or label-based correlations:
∘ generation of models for making predictions;
∘ generation of models for detecting anomalies;
∘ generation of models for estimating values of missing data; and
∘ automatic grouping of metrics labelled in accordance with similar behaviours in time, spatial proximity or spatial affinity (origins-destinations).

17. The method for analysing the behaviour of people in physical spaces, according to any of the preceding claims, **characterised in that** it comprises a series of image capture and processing devices (1) distributed such as to cover all or part of the surface of the physical space to be monitored; a central unit (9) joined either wirelessly or hard-wired to each and every one of the devices, with the object of carrying out the temporal consolidation of the detections and establishments of trajectories (8) in said central unit, wherein the image capture and processing devices (1) are overhead devices comprising a visible spectrum camera with a very wide-angle view -up to 200 effective degrees-, capturing images with three colour channels at an acquisition rate of between 1 and 8 images per second, wherein the devices have an overhead location with the image plane parallel to the ground to maximise the coverage, and wherein the distributed image capture and processing devices (1) may be any from among a general-purpose processor, a digital signal processor, a Field Programmable Gate Array (FPGA) type hardware device, a dedicated Application-Specific integrated Circuit (ASIC) or a combination thereof.

## Amended claims

### Amended claims under Art. 19.1 PCT

1. A method for analysing the behaviour of people in physical spaces, **characterised in that** it comprises the stages of:
- **capture of a sequence of images** by means of a series of overhead image capture and processing devices (1) mounted high up and distributed over a surface to be covered (2);
- **establishment of a coverage area,** with an image (3) based on the sequence of images previously captured, where said image (3) is cropped to establish the coverage area (4) of each device (1);
- **establishment of a Region of Interest** (5), using a mask bitmap, which is delimited using included areas and excluded areas, the pixels belonging to the area of interest maintain the same value as in the original image, while pixels of the non-interest areas or outside the area of interest are fixed at a constant value;
- **background segmentation** wherein a mask-type image (6) is generated from the original image, having the same dimensions, wherein the pixels corresponding to static objects have a value 0 and the pixels corresponding to moving objects have a value other than 0;
- **cleaning and filtering of regions** of the mask-type image (6), in this stage deficiencies arising from the background segmentation operation are eliminated and corrected being eliminating, false detections, split objects, merge objects, objects with cavities, this step is carried out based on the mask-type image, having a size (Wp, Hp, 1), obtaining a mask-type image having a size (Wp, Hp, 1). The image is a mask: with background pixels = 0, detection area pixels ≠ 0, wherein a sequence of binary morphological operations is used: erosion, dilation, opening, closing, propagation, filling of cavities. The joint result is: eliminate isolated and small detection areas, eliminate holes in detection areas, connect split detection areas corresponding to the same object.
- **generation of candidate regions** wherein the image obtained after the cleaning and filtering of regions is analysed with the improvement of the background segmentation image, in order to group together the pixels which have a set of connected pixels forming to compact regions and assign these pixels a unique label on the image wherein a connected-component labelling method is used.
- **classification of candidate regions** of the previously generation of candidate region **into persons and non-persons** using a mathematical model which has been adjusted using training images.
classification is performed in two steps:
- extraction of structural characteristics, which is done by applying a mathematical operator to the image of the region, whose objective is to change to a representation with a smaller dimensionality; and a supervised classification system that consists of assigning each features vector to a class; to this end, a mathematical model which has been adjusted using training vectors is used;
This stage generates a mask-type image wherein the background pixels have a value 0 and the pixels corresponding to the candidate region "i" have a value i. The total number of these regions is N.
- **obtainment of discreet detections** from of the candidate regions, which is a mask labelled with N labels wherein the pixels corresponding to the "i" region have a value i, 0 < i ≤ N;
- next, a **temporal consolidation of detections** is carried out from the discreet detections, i.e. the detection of persons which is performed instantly and independently for each discreet detections;
using a temporal detection consolidation mechanism to track moving detections based on that those objects which have a position in a time instant will be in a nearby position in a nearby time instant where a unique identifier can be assigned to the detections corresponding to the same person in successive time instants wherein detections are calculated from different images,
- **next, data obtained from the temporal consolidation of detections are prepared in global coordinates** upon obtaining the temporal consolidation of the moving detections, which consists of transferring the detections from the devices to a coordinate system common to all the space of the coverage area; this step comprises, in turn:
- correcting the distortion or the deviation with respect to a straight line,
- transfer to global coordinates,
- generation of trajectories of the temporal consolidation detections transferred to global coordinates; and
- **generation of metrics,** which are calculated using the trajectories referenced to a local coordinate system of each device or using the trajectories in global space coordinates.
wherein the generation of metrics is carried out using any of the methods described below or combinations thereof:
∘ basic metrics,
a) barrier meters,
b) capacity meters,
c) analysis of complete space partition,
d) analysis of origins and destinations,
∘ derived metrics,
a) compound counts,
b) time of permanence, and
c) proportions (ratios).

2. The method for analysing the behaviour of people in physical spaces, according to claim 1, **characterised in** the background segmentation is carried out in order to assign the pixels values is used an Adaptive Gaussian Mixture-based Background/Foreground Segmentation Algorithm is used, or a dense optical flow segmentation algorithm and adaptive threshold, or non-parametric models, or an algorithm based on the difference between consecutive images and an adaptive threshold.

3. The method for analysing the behaviour of people in physical spaces, according to claim 1 or 2, **characterised in that** in the step of cleaning and filtering of regions is done additionally
• noise reduction due to the increase in observation time through the integration of successive masks,
wherein the observation time increase process is carried out based on a mask-type image, size (Wp, Hp, 1), obtaining a mask-type image, having a size (Wp, Hp, 1) and is implemented averaging the mask images corresponding to the increased observation time, while
the increase in observation time is carried out based on a mask-type image, size (Wp, Hp, 1), obtaining a mask-type image, and size (Wp, Hp, 1) wherein the image is a mask: with background = 0, movement ≠ 0, using a sequence of binary morphological operations: erosion, dilation, opening, closing, propagation and filling of cavities.

4. The method for analysing the behaviour of people in physical spaces, according to claim 1 or 2 or 3 or 4, **characterised in that** a Histogram of Oriented Gradients (HOG) is used to generate structural features in the stage of candidate regions in persons or non-persons.

5. The method for analysing the behaviour of people in physical spaces, according to any of the preceding claims, **characterised in that** the support vector machines method is used for the supervised classification in the candidate regions stage.

6. The method for analysing the behaviour of people in physical spaces, according to any of the preceding claims, **characterised in that** the spatial descriptor used to obtain discreet detections is one or a combination of the following spatial descriptors:
- position of the centre of mass of the region (x, y),
- bounding box of the region (xmin, ymin, xmax, ymax),
- position of the projection of the detection on the ground (xs, ys), which would correspond to the place wherein a person has their feet,
- area and perimeter of the region (number of pixels),
- colour histogram;
- description of the shape of the region:
∘ main directions,
∘ aspect ratio, and
∘ compactness.

7. The method for analysing the behaviour of people in physical spaces, according to any of the preceding claims, **characterised in that** consolidation by tracking of moving detections is carried out based on a list of N discreet detections and a list of N consolidated detections, called tracks, are obtained wherein each track corresponds to a discreet detection which has been assigned a unique identifier for that sensor: the track is defined by a unique identifier, a position descriptor (which may be improved and/or extended with respect to the original detection), a time instant and an information uncertainty measurement;
tracking of moving detections uses a status vector to represent the detections and a mathematical model of the evolution of the system; this process has the following stages:
• association of detections with existing tracks: determination of the detections that correspond to existing tracks;
• update of existing tracks: update of the track descriptor with the data of the new detection;
• generation of new tracks: generation of a new identifier for detections that do not correspond to existing tracks;
• track maintenance: elimination of tracks which have not been recently updated, typically corresponding to persons who have left the coverage area or to false detections;
While for monitoring tracks:
• the mathematical model uses the spatial descriptor obtained from the discreet detections as a status vector;
• association of detections with existing tracks using the Global Nearest Neighbour Standard Filter technique;
• update of existing tracks with an alpha-beta filter or with a Kalman filter; and
• maintenance of tracks with elimination when they exceed a preconfigured time without updating.

8. The method for analysing the behaviour of people in physical spaces, according to any of the preceding claims, **characterised in that** the image capture and processing devices (1) carried out a correction of distortion which has the following features:
∘ input: list of N detections; they are detections whose coordinates are associated with the local reference system of each device and are the object of distortion of the wide-angle lens;
∘ output: list of N detections, with the distortion corrected for the local coordinates;
two camera models are considered from the viewpoint of distortion:
• wide-field camera with radial distortion;
• fisheye lens camera; it is an extreme case of radial distortion wherein the camera captures images with a field of view close to or greater than 180°;
it is considered a mathematical model for correcting distortion in each of the preceding cases, wherein the mathematical model for correcting distortion for a wide-angle camera uses a polynomial model for both radial and tangential deviation; the polynomial coefficients are those that specifically characterise each camera, while the mathematical model for correcting distortion in a fisheye lens camera uses a polynomial model over the trigonometric tangent function for the radial deviation; and the coefficients of the polynomial are those which specifically characterise each camera.
Wherein input is referred to the input data of said stage coming from the output data of the a previous stage, and when output is mentioned is referred to the output data of the stage that explained and said output data will be the input of the next stage.

9. The method for analysing the behaviour of people in physical spaces, according to any of claims 1 to 7, **characterised in that** the transfer to global coordinates is carried out performing a perspective transformation or homograph or matrix operation, which has a transformation matrix, wherein the transformation matrix is individual for each overhead image capture and processing device (1) and also has:
∘ input: list of N detections which are detections whose coordinates are associated with the local reference system of each overhead image capture and processing devices (1) and wherein the distortion of the wide-angle lens of the overhead image capture and processing devices (1) has been corrected;
∘ output: list of N detections, wherein a new spatial descriptor has been calculated for each detection in the global coordinate system of the supervision analysis area; and these global coordinates are common to all the devices.
Wherein input is referred to the input data of said stage coming from the output data of the a previous stage, and when output is mentioned is referred to the output data of the stage that explained and said output data will be the input of the next stage.

10. The method for analysing the behaviour of people in physical spaces, according to any of claims 1 to 7, **characterised in that** the generation of trajectories is carried out in each overhead image capture and processing device (1)autonomously, identifying all the detections belonging to a single person in the coverage area of that device and groups them together in a track wherein each track is a partial segment of the trajectory of that person in space; specifically it is the segment which is inside the coverage area of that overhead image capture and processing device (1) and wherein the trajectory generation process analyses the partial segments generated by all the overhead image capture and processing devices (1) and combines them to obtain the complete trajectories of persons and wherein this stage also has:
• input: list of N detections in global coordinates wherein the list contains all the detections generated within a time interval and belonging to all the devices in the area under study;
• output: list of M detections grouped into K trajectories; M ≤ N, K<N, wherein each trajectory has a unique identifier and can combine detections from various devices.

11. The method for analysing the behaviour of people in physical spaces, according to claim 10, **characterised in that** the trajectory generation process has the following stages:
• establishment of compatibility between tracks: determination of whether two tracks of physically close regions can correspond to a single person; potentially, the tracks can come not only from physically close regions but also from the same region, in the overlap area between devices;
• association of tracks: using the compatibility measurement of the previous stage, compatible tracks are grouped together, in the most likely way, to form the trajectories; and
• estimated trajectories: combination of the data of the tracks which have become associated.

12. The method for analysing the behaviour of people in physical spaces, according to claim 1, **characterised in that** the different types of basic metrics have the following features:
a) barrier meters that use a virtual barrier, defined as a sequence of points referenced to the same coordinate system as the detections to be processed;
b) capacity meters wherein a virtual area is used, defined as a sequence of points that form a closed polygonal line, referenced to the same coordinate system as the detections to be processed;
c) space partitioning analysis
the space is partitioned into areas or units; this partition can be extended to all or part of the coverage area; the partition areas do not overlap each other;
d) calculation of origins and destinations
each area of interest can be defined as (a) a sequence of points that form a closed polygonal line or (b) a circle, represented by its centre (a point) and its radius (a distance).

13. The method for analysing the behaviour of people in physical spaces, according to claim 11, **characterised in that** the different types of derived metrics have the following features:
a) compound counts wherein the counts corresponding to the set of metrics are aggregated to obtain a metric of the same type and which is representative of the set;
b) times of permanence are calculated using three metrics: entry counts, exit counts and capacity counts of an area; a mathematical model is used that estimates the average time of permanence in the space based on the entry and exit counts and the capacity count of the space;
c) Proportions (ratios), wherein the quotient between the metrics is calculated.

14. The method for analysing the behaviour of people in physical spaces, according to any of the preceding claims, **characterised in that** the following take place additionally and complementarily after the generation of metrics:
- metrics labelling: assignment of semantic information to individual metrics or groups of metrics;
- storage of metrics;
- analysis of patterns and generation of behavioural models based on behavioural metrics and taking into account temporal, spatial or label-based correlations:
∘ generation of models for making predictions;
∘ generation of models for detecting anomalies;
∘ generation of models for estimating values of missing data; and
∘ automatic grouping of metrics labelled in accordance with similar behaviours in time, spatial proximity or spatial affinity (origins-destinations).

15. system for analysing the behaviour of people in physical spaces, according to any of the preceding claims, **characterised in that** it comprises a series of image capture and processing devices (1) distributed such as to cover all or part of the surface of the physical space to be monitored; a central unit (9) joined either wirelessly or hard-wired to each and every one of the devices, with the object of carrying out the temporal consolidation of the detections and establishments of trajectories (8) in said central unit, wherein the image capture and processing devices (1) are overhead devices comprising a visible spectrum camera with a very wide-angle view -up to 200 effective degrees-, capturing images with three colour channels at an acquisition rate of between 1 and 8 images per second, wherein the devices have an overhead location with the image plane parallel to the ground to maximise the coverage, and wherein the distributed image capture and processing devices (1) may be any from among a general-purpose processor, a digital signal processor, a Field Programmable Gate Array (FPGA) type hardware device, a dedicated Application-Specific integrated Circuit (ASIC) or a combination thereof.
